# EUROPÄISCHE PATENTSCHRIFT

(11) **EP 0 603 222 B1**
(45) Veröffentlichungstag und Bekanntmachung des Hinweises auf die Patenterteilung: **14.06.1995**
(21) Anmeldenummer: 92918250.9
(22) Anmeldetag: 01.09.1992
(51) Int. Cl.: F01N 3/28, F01N 7/00, G01K 13/02, H05B 3/50

(54) **KATALYSATOR-TRÄGERKÖRPER**
CATALYZER BEARING BODY
SUPPORT DE CATALYSEUR

(30) Priorität: 09.09.1991 DE 4129893
(43) Veröffentlichungstag der Anmeldung: 29.06.1994
(73) Patentinhaber: Emitec Gesellschaft für Emissionstechnologie mbH, 53797 Lohmar (DE)
(72) Erfinder: Maus, Wolfgang, D-5060 Bergisch Gladbach 1 (DE); Brück, Rolf, D-5060 Bergisch Gladbach 1 (DE)
(74) Vertreter: Kahlhöfer, Hermann, Dipl.-Phys.
(86) Internationale Anmeldenummer: EP9202009
(87) Internationale Veröffentlichungsnummer: WO9305284

(56) Entgegenhaltungen:
- WO-A-91/14855
- FR-A- 2 293 846
- US-A- 1 494 939
- US-A- 1 731 472
- US-A- 4 317 367
- PATENT ABSTRACTS OF JAPAN vol. 6, no. 51 (P-108)(929) 6. April 1982 & JP-A-56 164 931 (NIPPON JIDOSHA BUHIN SOGO KENKYUSHO K.K.) 18. Dezember 1981

## Beschreibung

Die vorliegende Erfindung betrifft einen Katalysator-Trägerkörper für Abgasanlagen von Verbrennungsmotoren mit einer Anordnung zur Temperaturmessung und/oder zur Heizung des Katalysator-Trägerkörpers.

Im Zusammenhang mit weltweit immer strenger werdenden Emissionsvorschriften für Verbrennungsmotoren, insbesondere bei Kraftfahrzeugen, werden zunehmend katalytische Konverter zur Entgiftung der Abgase eingesetzt. Im allgemeinen ist es erforderlich, den Verbrennungsprozeß eines Motors in Abhängigkeit von vielen Meßwerten zu regeln und auch die Funktionsfähigkeit und den Zustand eines nachgeordneten katalytischen Konverters zu überwachen und gegebenenfalls in die Regelung mit einzubeziehen. Insbesondere sind dabei Temperaturmessungen im Abgassystem und/oder im katalytischen Konverter selbst erforderlich.

Der prinzipielle Aufbau eines katalytischen Konverters ist beispielsweise in der WO 89/07488 beschrieben, wobei hier insbesondere ein metallischer Katalysator-Trägerkörper beschrieben ist, welcher aus einer Vielzahl von zumindest teilweise strukturierten Blechlagen besteht, von denen eine oder mehrere verstärkt sind, indem diese Blechlagen aus zwei oder mehr gleichartig strukturierten aneinanderliegenden Blechlagen bestehen.

Auch aus der WO 90/03220 sind verschiedene Ausgestaltungen von Katalysator-Trägerkörpern aus strukturierten Blechlagen, insbesondere abwechselnd angeordneten glatten und gewellten Blechlagen bekannt. Aus der WO 89/10471 ist auch eine elektrische Beheizung solcher Wabenkörper bekannt.

Schließlich zeigt die nicht vorveröffentlichte ältere internationale Anmeldung WO 90/03220 verschiedene Möglichkeiten zur Integration von Temperaturfühlern in einen metallischen Wabenkörper, um in diesem direkt die Temperatur zu messen.

Ein Problem bei der Temperaturmessung im Abgas und speziell im Inneren eines katalytischen Konverters besteht darin, daß das Abgas bei Temperaturen von u. U. über 1000° C sehr korrosiv wirkt, und deshalb Legierungen, die sich im Prinzip gut für Temperaturfühler oder als Heizleiter eignen würden, nicht problemlos ungeschützt eingesetzt werden können.

Ein anderes Problem besteht darin, daß die Abgasströmung in einem Abgassystem kein über den Querschnitt des Abgassystems gleichmäßig verteiltes Temperaturprofil hat, so daß eine punktuelle Temperaturmessung im allgemeinen nicht besonders aussagekräftig ist. Aus diesem Grunde sollte, wie bereits in der WO 90/03220 angegeben, die Messung nach Möglichkeit linienförmig über einen repräsentativen Querschnitt des Abgassystems erfolgen.

Durch die US-A-1 494 939 ist eine Heizeinrichtung bekannt, welche zwischen zwei Heizplatten eine Heizeinrichtung aufweist. Durch diese Ausbildung wird das Ziel verfolgt, die Heizfläche eines Heizleiters zu vergrößern. Eine Integration eines Meßleiters in eine filigrane Struktur ist nicht vorgesehen.

Aufgabe der vorliegenden Erfindung ist die Schaffung eines KatalysatorTrägerkörpers für Abgasanlagen von Verbrennungsmotoren mit einer Anordnung zur Temperaturmessung und/oder zur Heizung der Wände des Katalysator-Trägerkörpers, welche insbesondere im Inneren von katalytischen Konvertern eingesetzt werden kann, und die die Verwendung beliebiger Materialien ohne Rücksicht auf deren Korrosionseigenschaften erlaubt.

Zur Lösung dieser Aufgabe dient ein Katalysator-Trägerkörper für Abgasanlagen von Verbrennungsmotoren mit einer Anordnung zur Temperaturmessung und/oder zur Heizung der Wände des Katalysator-Trägerkörpers, enthaltend
a) mindestens zwei Lagen, nämlich eine Oberlage und eine Unterlage, die überwiegend dicht aneinanderliegen und aus gleichartig strukturierten Metallfolien einer Dicke von 0,02 bis 0,1 mm bestehen;
b) mindestens einen durch Auswölbung mindestens einer der beiden Lagen gebildeten Hohlraum zwischen den beiden Lagen;
c) mindestens einen Temperaturfühler und/oder Heizleiter, der in dem Hohlraum (38) verläuft bzw. dessen Zuleitungen in dem Hohlraum verlaufen.

Bei einer solchen Anordnung können die Ober- und Unterlage aus einem hochtemperatur-korrosionsfesten Material bestehen und den eigentlichen Temperaturfühler oder dessen Zuleitungen schützen. Dabei ist die vorliegende Erfindung gleichermaßen für punktförmig messende Fühler, deren Zuleitungen geschützt werden müssen wie auch für linienförmig oder flächig messende Fühler bzw. Heizleiter, die insgesamt geschützt werden müssen, gleichermaßen geeignet. Typischerweise bestehen Temperaturfühler aus einem Widerstandsdraht oder einer Widerstandsfolie, insbesondere aus Nickellegierungen. Häufig Verwendung finden sogenannte Mantelmeßleiter, in denen ein Widerstandsdraht, eingebettet in eine Schicht aus elektrisch isolierendem keramischen Pulver in einem Metallmantelröhrchen angeordnet ist. Für solche Mantelmeßleiter ist die Erfindung besonders geeignet, jedoch ist es gerade wegen des Vorhandenseins der schützenden Ober- und Unterlage auch möglich, einen Meßleiter zwischen elektrisch isolierenden Schichten direkt einzubetten. Dabei kann ein Meßleiter an seinem Ende mit der Ober- oder Unterlage verbunden sein, so daß nur eine elektrisch leitende Ader zu verlegen und anzuschließen ist, während der andere Anschluß durch den üblicherweise vorhandenen Kontakt der Ober- und Unterlage an Masse erfolgt. Grundsätzlich eignet sich die Erfindung jedoch auch für zweiadrige oder sogar mehradrige Anordnungen, insbesondere für U-förmig in einem Mantelröhrchen verlegte Leiter.

Da im allgemeinen für die Ober- und Unterlage sehr dünne Metallfolien mit einer Dicke von 0,02 bis 0,1 mm eingesetzt werden, ist es sinnvoll, den Hohlraum zur Verlegung von Heizleitern, Temperaturfühlern bzw. Zuleitungen, im folgenden immer als Meßleiter bezeichnet, durch Auswölbungen in beiden Lagen zu bilden, so daß die erforderlichen Verformungen nicht zu groß werden. Grundsätzlich ist es jedoch auch möglich, nur in einer der beiden umgebenden Lagen durch Auswölbung einen Hohlraum zu schaffen. Dabei läßt sich die erfindungsgemäße Ausbildung praktisch in beliebig strukturierten Blechlagen unterbringen, jedoch hat es sich als besonders günstig erwiesen, wenn die Blechlagen eine Wellung bestimmter Wellhöhe aufweisen und der Meßleiter etwa quer zur Wellung verläuft. Dabei ist es für den späteren Aufbau eines Katalysator-Trägerkörpers besonders günstig, wenn die Auswölbungen so gestaltet sind, daß sie die Wellhöhe nicht verändern, sondern immer an den Welleninnenseiten liegen. Eine solche Anordnung kann beispielsweise dadurch hergestellt werden, daß ein Meßleiter mittels zweier ineinandergreifender Zahnwalzen, insbesondere mit einer Evolventenverzahnung, zwischen zwei Metallfolien eingewalzt wird. Dabei werden beide Wellwalzen außen in Umfangsrichtung mit einer Nut versehen, deren Tiefe etwa dem Durchmesser des einzuwalzenden Meßleiters entspricht. Diese Nut bedeutet eine Einkerbung nur der Zähne der Wellwalzen, welche später die Innenseite der Wellung formen. Auf diese Weise kann ein Meßleiter gerade so eingewalzt werden, daß er immer an den Innenseiten der Wellung verläuft und damit die Wellhöhe nicht beeinflußt, so daß die Wellkämme auf beiden Seiten der Wellung das Vorhandensein des Meßleiters nicht erkennen lassen. Dies kann bei der späteren Verarbeitung zu einem metallischen Wabenkörper eine entscheidende Rolle spielen.

Zwar ist es grundsätzlich möglich, einen Meßleiter auch zwischen glatte Folien einzuwalzen, beispielsweise durch ein Walzenpaar, bei dem mindestens eine Walze aus einem elastischen Material besteht, jedoch kann eine solche glatte Blechlage nicht beliebig gut zu einem Katalysator-Trägerkörper weiterverarbeitet werden, da die Auswölbung u. U. eine entsprechende Nut in benachbarten strukturierten Blechlagen erfordern kann und eine glatte Blechlage mit einer Auswölbung biegesteifer als übliche glatte Blechlagen ist. Im Gegensatz dazu ist eine gewellte Blechlage mit einem Meßleiter sehr elastisch, an ihren äußeren Anlagelinien nicht von einer üblichen gewellten Blechlage zu unterscheiden und nimmt aufgrund der Wellung einen wesentlich längeren Temperaturfühler bzw. Heizleiter auf als eine glatte Blechlage, was die Meßgenauigkeit deutlich erhöhen kann bzw. beliebige Widerstände des Heizleiters zuläßt.

Für die Langzeitbeständigkeit in einem korrosiven Medium kann es wichtig sein, daß der Meßleiter tatsächlich gasdicht zwischen den beiden Lagen untergebracht ist. Dazu ist es sinnvoll, die Lagen zumindest an ihren Rändern gasdicht miteinander zu verbinden, vorzugsweise zu verlöten. Dies kann insbesondere dadurch erreicht werden, daß eine dünne, beispielsweise selbstklebende, Lötfolie entlang der Ränder der Lagen gleichzeitig mit dem Meßleiter eingewalzt wird, so daß in einem späteren Fertigungsschritt eine Verlötung erfolgen kann. Natürlich können Ober- und Unterlage auch durch Falten nur einer Folie gebildet werden, so daß nur der andere Rand verlötet werden muß.

Insbesondere, wenn die Lagen allein oder zusammen mit anderen zumindest teilweise strukturierten Blechlagen zu einem Katalysator-Trägerkörper geformt werden, der eine Vielzahl von für ein Fluid durchströmbaren Kanälen aufweist, erfolgt später ohnehin eine stirnseitige Verlötung der Blechlagen, so daß allein schon durch diesen Prozeß eine Verlötung auch der beiden den Meßleiter schützenden Lagen erfolgen kann. Auch hier kann jedoch eine zusätzliche miteingewalzte Lötfolie die Qualität und Dichtigkeit verbessern. Wie anhand der Zeichnung noch näher erläutert wird, ist es besonders günstig, wenn die Temperaturfühleranordnung allein oder zusammen mit anderen zumindest teilweise strukturierten Blechlagen zu einem Wabenkörper geformt ist, welcher als Trägerkörper für katalytisch aktives Material dient. In diesem Falle mißt der Temperaturfühler nicht die Gastemperatur im Abgas eines Verbrennungsmotors, sondern direkt die Wandtemperatur im katalytischen Konverter, wodurch die Aussagekraft der Temperaturmessung in bezug auf dessen Funktionsfähigkeit erhöht wird.

Solche Katalysator-Trägerkörper sind typischerweise von einem Mantelrohr umgeben, durch welche natürlich der Meßleiter hindurchgeführt werden muß. Dies kann erfindungsgemäß insbesondere durch ein Fenster erfolgen, was fertigungstechnisch besonders günstig ist. Dabei weisen die Ober- und/oder Unterlage eine verlängerte Anschlußlasche auf, welche mit dem darin eingebetteten Meßleiter durch das Fenster nach außen geführt werden kann, ohne daß dies einen Fertigungsprozeß besonders stört.

Es sei darauf hingewiesen, daß die erfindungsgemäße Anordnung sich zwar besonders für die Temperaturmessung bzw. Heizung in einem metallischen Wabenkörper eignet, jedoch nicht auf diese Anwendungsfälle beschränkt ist. Grundsätzlich können solche Anordnungen auch an anderen Stellen eingesetzt werden.

Ausführungsbeispiele der Erfindung, auf die die Erfindung jedoch nicht beschränkt ist, sind in der Zeichnung dargestellt, und zwar zeigen
- Fig. 1: einen zwischen zwei glatten Folien eingewalzten Mantelmeßleiter,
- Fig. 2: einen zwischen zwei gewellten Folien eingewalzten Meßleiter,
- Fig. 3: eine zwischen zwei glatte Blechlagen eingewalzte Meßleiterfolie,
- Fig. 4: einen Blechstapel zur Herstellung eines Katalysator-Trägerkörpers mit zwischengelegter Temperaturfühleranordnung,
- Fig. 5: einen aus dem Stapel gemäß Fig. 4 hergestellten Katalysator-Trägerkörper,
- Fig. 6 und 7: verschiedene Möglichkeiten zum Verlauf von Meßleitern zwischen zwei Metallfolien und
- Fig. 8: schematisch den Verlauf von Auswölbungen bei erfindungsgemäß gewellten Temperaturfühleranordnungen.

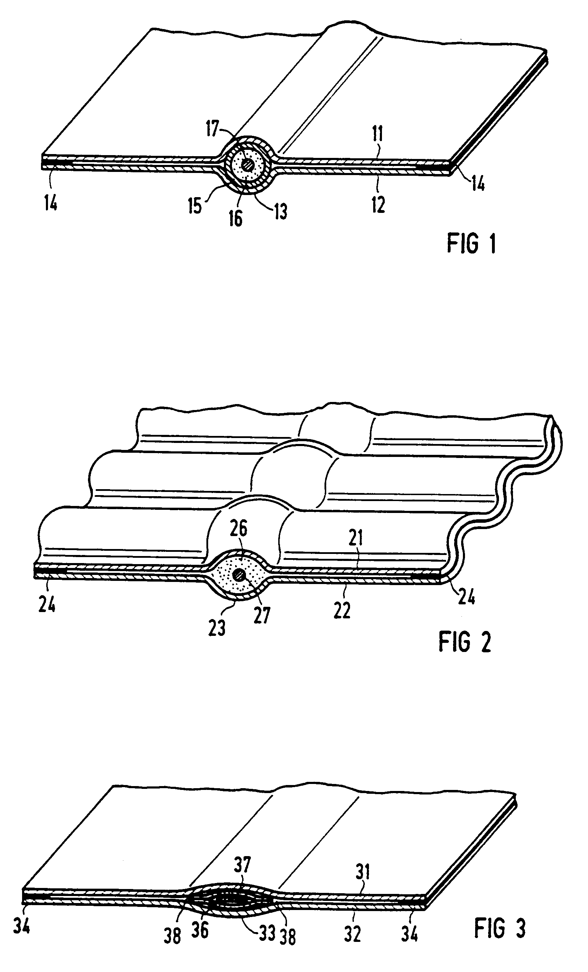

Figur 1 zeigt in quer geschnittener, perspektivischer Darstellung eine glatte Oberlage 11, eine glatte Unterlage 12, welche beide Auswölbungen 13 aufweisen. In dem durch die Auswölbungen 13 gebildeten Hohlraum liegt ein Mantelmeßleiter bestehend aus einem Metallmantelröhrchen 15, einer Isolierschicht 16 und einem Meßleiter 17. An den Rändern sind die Oberlage 11 und die Unterlage 12 durch Lötverbindungen 14 gasdicht miteinander verbunden, so daß sie den Mantelmeßleiter 15, 16, 17 vollständig gegen korrosive Gase schützen.

Figur 2 zeigt eine gewellte Oberlage 21, eine gewellte Unterlage 22, welche ebenfalls beide Auswölbungen 23 aufweisen, welche einen Hohlraum bilden. In diesem Hohlraum ist ein Meßleiter 27 eingebettet und durch eine Isolierschicht 26 von den umgebenden Lagen elektrisch isoliert. Auch hier sind die Oberlage 21 und die Unterlage 22 an ihren Rändern durch Lötverbindungen 24 gasdicht verbunden.

Figur 3 zeigt eine andere Variante, nämlich die Einbindung einer Meßleiterfolie 37 zwischen einer Oberlage und einer Unterlage 32. Relativ flach verlaufende Auswölbungen 33 bilden hier einen flächigen Hohlraum 38, in welchem die Meßleiterfolie 37, eingebettet zwischen zwei Isolierlagen 36, beispielsweise aus Faservlies, angeordnet ist. Wiederum sind die Ränder durch Lötverbindungen 34 abgedichtet.

Alle in dem Ausführungsbeispiel gezeigten Meßleiteranordnungen lassen sich entweder in glatte oder in strukturierte Blechlagen einbinden, wobei es natürlich auch möglich ist, zwei oder mehr voneinander beabstandete Meßleiter unterzubringen.

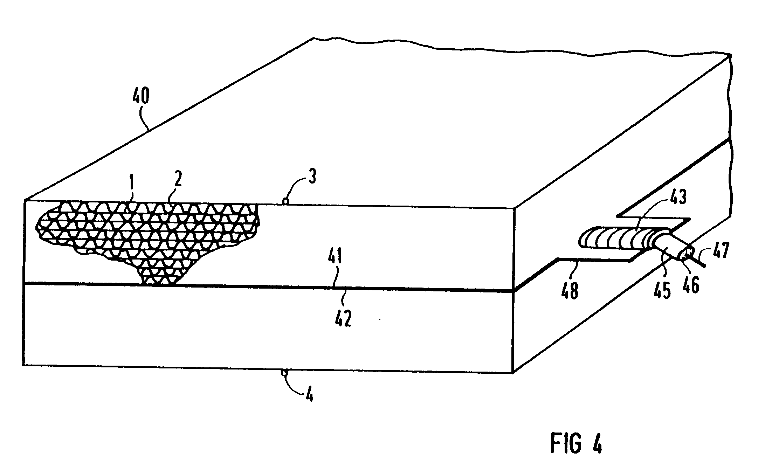

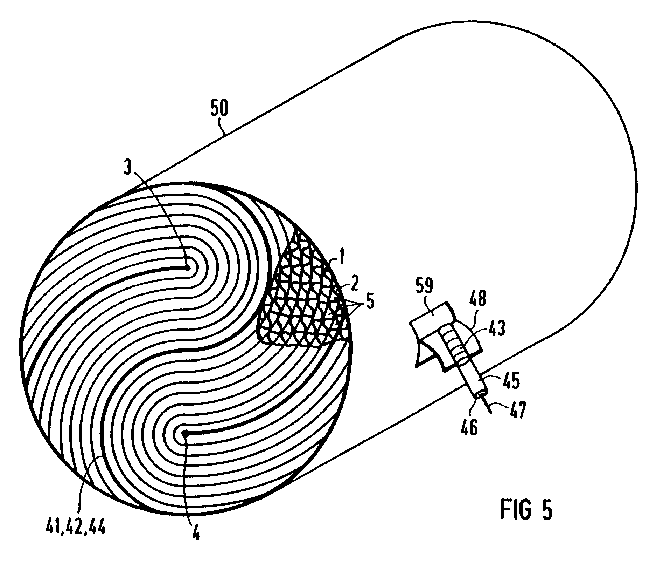

Fertigungsprozeß zur Herstellung von metallischen Katalysator-Trägerkörpern einbinden. Ein solcher Fertigungsprozeß, auch für Blechlagen unterschiedlicher Dicke ist bereits in der WO 89/07488 und den darin zitierten Schriften ausführlich beschrieben, so daß hier nur auf die durch das Vorhandensein des Temperaturfühlers entstehenden Besonderheiten hingewiesen werden soll. Figur 4 zeigt einen Stapel aus abwechselnd angeordneten Lagen glatter 1 und gewellter 2 Bleche, in dessen Innerem sich eine Oberlage 41 und eine Unterlage 42 mit dazwischen angeordnetem Mantelmeßleiter 45, 46, 47 befindet. Diese Lage weist eine verlängerte Anschlußlasche 48 auf, welche seitlich aus dem Stapel 40 herausragt. In dieser Anschlußlasche 48 befindet sich zwischen Auswölbungen 43 auch der Mantelmeßleiter 45, 46, 47, welcher seineseits zum Zwecke eines späteren Anschlusses oder zur Anbringung einer Anschlußbuchse aus der Anschlußlasche 48 herausragt. Der ganze Stapel 40 kann, wie aus dem Stand der Technik bekannt, um zwei Fixpunkte 3, 4 gegensinnig verschlungen und in ein Mantelrohr 50 eingebracht werden. Durch Drehen des Blechstapels 40 in dem Mantelrohr 50 kann die Anschlußlasche 48, wie in Figur 5 dargestellt, in eine Lage gebracht werden, daß sie aus einem in dem Mantelrohr 50 vorhandenen Fenster 59 herausragt. Der Mantelmeßleiter 45, 46, 47 ist dabei bis zum Austritt am Fenster 59 und noch ein Stück darüber hinaus durch die umgebende Anschlußlasche 48 geschützt, so daß eine dichte Durchführung nach außen sicher möglich ist. Die Anschlußlasche 48 kann beispielsweise in einem aufgelöteten oder angeschweißten Anschlußröhrchen mit anschließender Anschlußbuchse untergebracht werden, wodurch eine sehr robuste Anschlußmöglichkeit entsteht. Für diese Anordnung spielt es dabei keine Rolle, ob die Meßfühleranordnung aus glatten oder gewellten Blechlagen besteht, da dies den Fertigungsprozeß nicht beeinflußt. Auch im übrigen unterscheidet sich der Katalysator-Trägerkörper in seinen Eigenschaften und seinen für ein Fluid durchströmbaren Kanälen 5 nicht von den bekannten Körpern.

Insbesondere bei einer stirnseitigen Verlötung des Katalysator-Trägerkörpers werden die Oberlage 41 und die Unterlage 42 mit Verbindung 44 dicht gegen das Eindringen von korrosivem Abgas geschützt. Dieses kann an keiner Stelle den Mantelmeßleiter erreichen. Natürlich ist es nicht erforderlich, einen Mantelmeßleiter aus Metallmantelröhrchen 45, Isolierschicht 46 und Meßleiter 47 für die beschriebene Anordnung zu verwenden. Auch die in den Figuren 2 und 3 gezeigten Varianten können gleichermaßen eingesetzt werden.

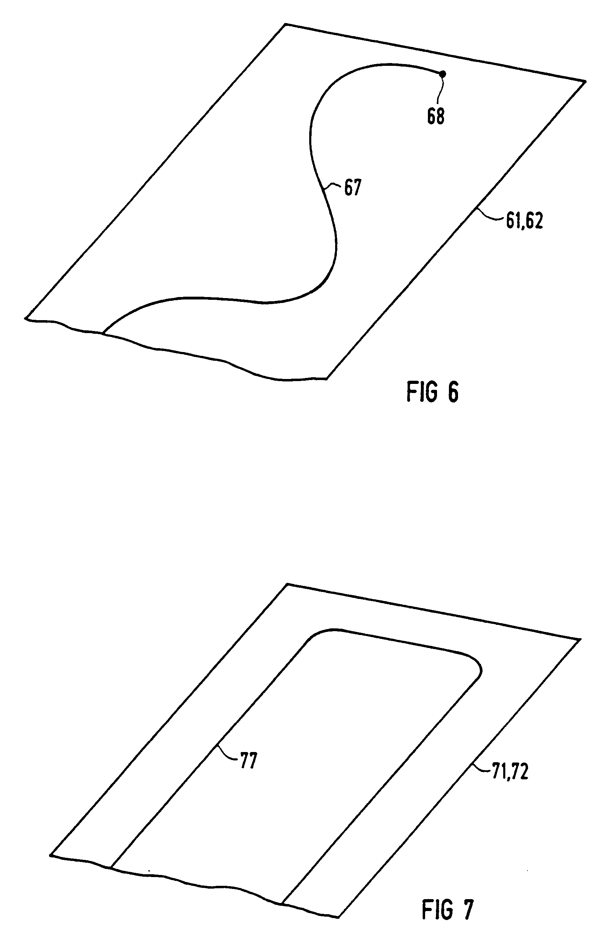

Figur 6 zeigt schematisch, daß ein Meßleiter oder dessen Zuleitung 67 nicht unbedingt geradlinig zwischen einer Oberlage 61 und einer Unterlage 62 verlaufen muß. Prinzipiell kann durch Einwalzen praktisch jeder gewünschte Verlauf ermöglicht werden. Auch falls man nur punktuell an einer einzigen Stelle messen will, eignet sich die erfindungsgemäße Anordnung hierfür. Ein eine Thermospannung erzeugendes Thermoelement kann beispielsweise punktuell angeordnet und über Meßleiter 67 angeschlossen werden. Dabei ist es prinzipiell auch möglich, Ober- und Unterlage an einer Kontaktstelle 68 mit einem Meßleiter aus geeignetem anderen Metall zu verbinden, so daß auf diese Weise eine Thermospannung entsteht. Gleichartig im Aufbau ist auch eine Anordnung, bei der an einer Kontaktstelle 68 ein Widerstandsdraht mit der Oberlage 61 oder der Unterlage 62 als Masse verbunden ist.

Gemäß Figur 7 kann natürlich ein Meßleiter 77 auch U-förmig zwischen einer Oberlage 71 und einer Unterlage 72 verlegt werden, so daß seine beiden Enden an verschiedenen Stellen herausgeführt werden können. Diese und viele weitere Varianten sind mit der erfindungsgemäßen Temperaturfühleranordnung zu verwirklichen. Insbesondere können auch die in der PCT/EP 89/00311, auf welche ausdrücklich vollinhaltlich Bezug genommen wird, beschriebenen Varianten verwirklicht werden, allerdings mit der Einschränkung, daß nicht die Gastemperatur in einem Katalysator-Trägerkörper, sondern bevorzugt die Wandtemperatur gemessen werden kann.

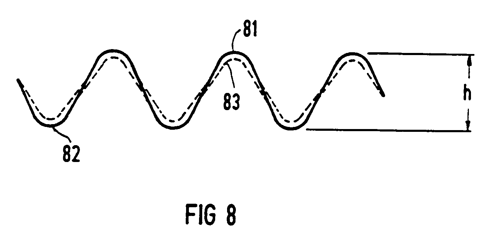

Die Figur 8 zeigt schließlich nochmals schematisch im Längsschnitt den Verlauf der Auswölbungen 83 bei aneinanderliegenden gewellten Blechlagen 81 und 82, zwischen denen ein nicht dargestellter Meßleiter angeordnet ist. Wie gestrichelt angedeutet, liegen die Auswölbungen immer an der Innenseite der Wellung, so daß die Wellhöhe h durch die Auswölbungen nicht beeinflußt wird. Die Auswölbungen 83 schneiden quasi die Flanken der Wellung und verlagern sich jeweils auf die Innenseiten.

Die vorliegende Erfindung eignet sich insbesondere für eine integrierte Temperaturüberwachung eines katalytischen Konverters und kann in Verbindung mit anderen Meßsystemen besonders gut zur abgasreduzierenden Motorsteuerung und zur Überwachung der Funktionsfähigkeit des katalytischen Konverters eingesetzt werden. Darüber hinaus kann eine erfindungsgemäße Anordnung auch zur elektrischen Beheizung z. B. von Katalysator-Trägerkörpern eingesetzt werden, insbesondere wenn die Beheizung mit höheren Spannungen und niedrigen Stromstärken von beispielsweise 5 - 20 A erfolgen soll.

## Patentansprüche

1. Katalysator-Trägerkörpers für Abgasanlagen von Verbrennungsmotoren, mit einer Anordnung zur Messung der Temperatur und /oder zur Heizung der Wände des Katalysator-Trägerkörper wobei die Anordnung gekennzeichnet ist durch:
a. mindestens zwei Lagen, nämlich eine Oberlage (11; 21; 31; 41; 61; 71) und eine Unterlage (12; 22; 32; 42; 62; 72; 82), die überwiegend dicht aneinanderliegen und aus gleichartig strukturierten Metallfolien einer von 0,02 bis 0,1 mm bestehen;
b. mindestens einen durch Auswölbung (13; 23; 33; 43; 83) mindestens einer der beiden Lagen (11, 12; 21, 22; 31, 32; 41, 42; 61, 62; 72; 81, 82) entlang den Lagen gebildeten Hohlraum (38) zwischen den beiden Lagen (11, 12; 21, 22; 31, 32; 41, 42; 61, 62; 71, 72; 81, 82);
c. mindestens einen Temperaturfühler (15, 16, 17; 27; 37; 45, 46, 47; 67; 77) und/oder Heizleiter, der in dem Hohlraum (38) verläuft bzw. dessen Zuleitungen (67) in dem Hohlraum (38) verlaufen.

2. Katalysator-Trägerkörper nach Anspruch 1,
**dadurch gekennzeichnet**, daß der Hohlraum (38) durch Auswölbungen (13; 23; 33; 43; 83) in beiden Lagen (11, 12, 21, 22; 31, 32; 41, 42; 61, 62; 71, 72; 81, 82) gebildet ist.

3. Katalysator-Trägerkörper nach Anspruch 1 oder 2,
**dadurch gekennzeichnet**, daß die Lagen (21, 22; 81, 82) eine Wellung bestimmter Wellhöhe (h) aufweisen und der Temperaturfühler (27) bzw. Heizielter etwa quer zur Wellung verläuft.

4. Katalysator-Trägerkörper nach Anspruch 3,
**dadurch gekennzeichnet**, daß die Auswölbungen (83) so gestaltet sind, daß sie die Wellhöhe (h) nicht verändern, sondern immer an den Welleninnenseiten liegen.

5. Katalysator-Trägerkörper nach einem der vorhergehenden Ansprüche,
**dadurch gekennzeichnet**, daß die Anordnung durch Einwalzen eines Temperaturfühlers (17; 27; 37; 47; 67; 77) bzw. Heizleiters zwischen zwei Metallfolien hergestellt ist.

6. Katalysator-Trägerkörper nach einem der vorhergehenden Ansprüche,
**dadurch gekennzeichnet**, daß der Temperaturfühler bzw. Heizleiter ein flächiger (37) oder linienförmiger (17; 27; 47; 67; 77) Leiter, insbesondere ein Widerstandsdraht oder eine Widerstandsfolie, ist.

7. Katalysator-Trägerkörper nach Anspruch 6, **dadurch gekennzeichnet**, daß der Fühler (67) bzw. Heizleiter an einer Kontaktstelle (68) am Ende mit Ober- und/oder Unterlage (61, 62) elektrisch leitend verbunden ist.

8. Katalysator-Trägerkörper nach Anspruch 6, **dadurch gekennzeichnet**, daß der Fühler (15, 16, 17; 45, 46, 47) ein Mantelmeßleiter ist.

9. Katalysator-Trägerkörper nach einem der Ansprüche 1 bis 5,
**dadurch gekennzeichnet**, daß der Fühler ein punktförmig messender Fühler (68), z. B. ein Thermoelement, ist, dessen Zuleitungen (67) zwischen den Lagen (61, 62) verlaufen.

10. Katalysator-Trägerkörper nach einem der vorhergehenden Ansprüche,
**dadurch gekennzeichnet**, daß die beiden Lagen (11, 12; 21, 22; 31,32; 41, 42; 61, 62; 71, 72; 81, 82) zumindest an ihren Rändern gasdicht miteinander verbunden sind, vorzugsweise verlötet (14; 24; 34; 44).

11. Katalysator-Trägerkörper nach einem der vorhergehenden Ansprüche,
**dadurch gekennzeichnet**, daß der Fühler (27; 37; 77) oder Heizleiter bzw. dessen Zuleitungen (67) durch Isolierschichten (26; 36) von der Oberlage (21; 31; 61; 71) und der Unterlage (22; 32; 62; 72) elektrisch isoliert ist bzw. sind.

12. Katalysator-Trägerkörper nach einem der vorhergehenden Ansprüche,
**dadurch gekennzeichnet**, daß die Lagen (11, 12; 21, 22; 31,32; 41, 42; 61, 62; 71, 72; 81, 82) aus hochtemperatur-korrosionsfestem Stahl, insbesondere eine Eisen-, Chrom-, Aluminiumlegierung, bestehen.

13. Katalysator-Trägerkörper nach Anspruch einem der vorhergehenden Ansprüchen, **dadurch gekennzeichnet**, daß der Katalysator-Trägerkörper von einem Mantelrohr (50) umgeben ist, welches mindestens ein Fenster (59) aufweist, durch welches der Temperaturfühler (17; 27; 37; 47; 67; 77) oder Heizleiter bzw. dessen Zuleitungen nach außen geführt ist bzw. sind.

14. Katalysator-Trägerkörper nach Anspruch 13, **dadurch gekennzeichnet**, daß die Oberlage (41) und/oder die Unterlage (42) eine verlängerte Anschlußlasche (48) aufweisen, welche zusammen mit dem darin eingebetteten Temperaturfühler (47) oder Heizleiter bzw. dessen Zuleitungen durch das Fenster (49) nach außen geführt sind.

## Claims

1. A catalyst carrier body for exhaust gas installations of internal combustion engines having an arrangement for measuring the temperature and/or for heating the walls of the catalyst carrier body, wherein the arrangement is characterised by:
a. at least two layers, namely an upper layer (11; 21; 31; 41; 61; 71) and a lower layer (12; 22; 32; 42; 62; 72; 82) which predominantly bear closely against each other and which comprise similarly structured metal foils of a thickness of 0.02 to 0.1 mm;
b. at least one cavity (38) formed between the two layers (11, 12; 21, 22; 31, 32; 41, 42; 61, 62; 71, 72; 81, 82) by outward bulging (13; 23; 33; 43; 83) of at least one of the two layers (11, 12; 21, 22; 31, 32; 41, 42; 61, 62; 71, 72; 81, 82) along the layers; and
c. at least one temperature sensor (15, 16, 17; 27; 37; 45, 46, 47; 67; 77) and/or heating conductor which extends in the cavity (38) or whose feed lines (67) extend in the cavity (38) respectively.

2. A catalyst carrier body according to claim 1 characterised in that the cavity (38) is formed by outwardly bulged portions (13; 23; 33; 43; 83) in both layers (11, 12; 21, 22; 31, 32; 41, 42; 61, 62; 71, 72; 81, 82).

3. A catalyst carrier body according to claim 1 or claim 2 characterised in that the layers (21, 22; 81, 82) have a corrugation of given corrugation height (h) and the temperature sensor (27) or heating conductor extends approximately transversely to the corrugation.

4. A catalyst carrier body according to claim 3 characterised in that the outwardly bulged portions (83) are of such a configuration that they do not alter the corrugation height (h) but always lie at the insides of the corrugation configuration.

5. A catalyst carrier body according to one of the preceding claims characterised in that the arrangement is produced by rolling a temperature sensor (17; 27; 37; 47; 67; 77) or heating conductor in between two metal foils.

6. A catalyst carrier body according to one of the preceding claims characterised in that the temperature sensor or heating conductor is a flat (37) or linear (17; 27; 47; 67; 77) conductor, in particular a resistance wire or a resistance foil.

7. A catalyst carrier body according to claim 6 characterised in that the sensor (67) or heating conductor is electrically conductively connected at a contact location (68) at the end of the upper and/or lower layer (61, 62).

8. A catalyst carrier body according to claim 6 characterised in that the sensor (15, 16, 17; 45, 46, 47) is a sheathed measuring conductor.

9. A catalyst carrier body according to one of claims 1 to 5 characterised in that the sensor is a sensor (68) for punctiform measurement, for example a thermocouple element, the feed lines (67) of which extend between the layers (61, 62).

10. A catalyst carrier body according to one of the preceding claims characterised in that the two layers (11, 12; 21, 22; 31, 32; 41, 42; 61, 62; 71, 72; 81, 82) are gas-tightly connected together, preferably soldered (14; 24; 34; 44), at least at their edges.

11. A catalyst carrier body according to one of the preceding claims characterised in that the sensor (27; 37; 77) or heating conductor or the feed lines (67) thereof is or are electrically insulated from the upper layer (21; 31; 61; 71) and the lower layer (22; 32; 62; 72) by insulating layers (26; 36).

12. A catalyst carrier body according to one of the preceding claims characterised in that the layers (11, 12; 21, 22; 31, 32; 41, 42; 61, 62; 71, 72; 81, 82) comprise steel which is resistant to high-temperature corrosion, in particular an iron, chromium, aluminium alloy.

13. A catalyst carrier body according to one of the preceding claims characterised in that the catalyst carrier body is surrounded by a casing tube (50) having at least one window (59) through which the temperature sensor (17; 27; 37; 47; 67; 77) or the heating conductor or the feed lines thereof is or are passed to the exterior.

14. A catalyst carrier body according to claim 13 characterised in that the upper layer (41) and/or the lower layer (42) have a prolonged connecting flap (48) which together with the temperature sensor (47) or heating conductor or feed lines thereof, embedded therein, are passed through the window (59) to the exterior.

## Revendications

1. Corps de support de catalyseur destiné à des systèmes de gaz d'échappement de moteurs à combustion interne, comportant un dispositif de mesure de la température et/ou de chauffage des parois du support de catalyseur, le dispositif étant caractérisé par :
a. au moins deux couches, à savoir une couche supérieure (11 ; 21 ; 31 ; 41 ; 61 ; 71) et une couche inférieure (12 ; 22 ; 32 ; 42 ; 62 ; 72 ; 82), qui sont en majeure partie accolées étroitement les unes contre les autres, et qui sont constituées de feuilles métalliques structurées de même nature d'une épaisseur comprise entre 0,02 et 0,1 mm ;
b. au moins un espace creux (38) formé le long des couches par des parties incurvées (13 ; 23 ; 33 ; 43 ; 83) de l'une au moins des deux couches (11, 12 ; 21, 22 ; 31, 32 ; 41, 42 ; 61, 62 ; 71, 72 ; 81, 82), entre les deux couches (11, 12 ; 21, 22 ; 31, 32 ; 41, 42 ; 61, 62 ; 71, 72 ; 81, 82) ;
c. au moins une sonde de température (15, 16, 17 ; 27 ; 37 ; 45, 46, 47 ; 67 ; 77) et/ou un conducteur chauffant qui s'étend dans l'espace creux (38), ou dont les lignes d'alimentation (67) s'étendent dans l'espace creux (38).

2. Corps de support de catalyseur selon la revendication 1,
caractérisé en ce que, l'espace creux (38) est formé par des parties incurvées (13 ; 23 ; 33 ; 43 ; 83) dans les deux couches (11, 12 ; 21, 22 ; 31, 32 ; 41, 42 ; 61, 62 ; 71, 72 ; 81, 82).

3. Corps de support de catalyseur selon l'une des revendications 1 ou 2,
caractérisé en ce que, les couches (21, 22 ; 81, 82) comportent une ondulation d'une certaine hauteur (h) d'ondulation, et en ce que la sonde de température (27) ou le conducteur chauffant s'étend à peu près transversalement par rapport à l'ondulation.

4. Corps de support de catalyseur selon la revendication 3,
caractérisé en ce que, les parties incurvées (83) sont conçues de telle sorte qu'elles ne modifient pas la hauteur (h) d'ondulation, mais qu'elles se situent toujours sur la face interne des ondulations.

5. Corps de support de catalyseur selon l'une quelconque des revendications précédentes,
caractérisé en ce que, le dispositif est fabriqué par cylindrage entre deux feuilles métalliques d'une sonde de température (17 27 ; 37 ; 47 ; 67 ; 77) ou d'un conducteur chauffant.

6. Corps de support de catalyseur selon l'une quelconque des revendications précédentes,
caractérisé en ce que, la sonde de température ou le conducteur chauffant est un conducteur plat (37) ou en forme de ligne (17 27 ; 47 ; 67 ; 77), en particulier un fil de résistance ou une feuille de résistance.

7. Corps de support de catalyseur selon la revendication 6,
caractérisé en ce que, au niveau d'un point de contact (68), l'extrémité de la sonde (67) ou du conducteur chauffant est reliée de façon électriquement conductrice à la couche supérieure et/ou inférieure (61, 62).

8. Corps de support de catalyseur selon la revendication 6,
caractérisé en ce que, la sonde (15, 16, 17 ; 45, 46, 47) est un conducteur de mesure chemisé.

9. Corps de support de catalyseur selon l'une quelconque des revendications 1 à 5,
caractérisé en ce que, la sonde est une sonde (68) à mesure ponctuelle, par exemple un thermocouple, dont les lignes d'alimentation (67) s'étendent entre les couches (61, 62).

10. Corps de support de catalyseur selon l'une quelconque des revendications précédentes,
caractérisé en ce que, les deux couches (11, 12 21, 22 ; 31, 32 ; 41, 42 ; 61, 62 ; 71, 72 ; 81, 82) sont reliées entre elles de façon étanche au gaz, au moins par leurs bords, de préférence par brasage (14 ; 24 ; 34 44).

11. Corps de support de catalyseur selon l'une quelconque des revendications précédentes,
caractérisé en ce que, la sonde (27 ; 37 ; 77) ou le conducteur chauffant, ou les lignes d'alimentation (67) de ce dernier, sont électriquement isolés par des couches isolantes (26 ; 36) de la couche supérieure (21 ; 31 ; 61 ; 71) et de la couche inférieure (22 ; 32 ; 62 ; 72).

12. Corps de support de catalyseur selon l'une quelconque des revendications précédentes,
caractérisé en ce que, les couches (11, 12 ; 21, 22 ; 31, 32 ; 41, 42 ; 61, 62 ; 71, 72 ; 81, 82) sont en acier résistant à la corrosion et aux hautes températures, en particulier en un alliage de fer, de chrome, d'aluminium.

13. Corps de support de catalyseur selon l'une quelconque des revendications précédentes,
caractérisé en ce que, le corps de support de catalyseur est entouré d'un tube de protection (50) qui comporte au moins une fenêtre (59), par laquelle la sonde de température (17 ; 27 ; 37 ;47 ; 67 ; 77) ou le conducteur chauffant, ou les lignes d'alimentation de ce dernier, sortent vers l'extérieur.

14. Corps de support de catalyseur selon la revendication 13,
caractérisé en ce que, la couche supérieure (41) et/ou la couche inférieure (42) comportent un collier de raccordement prolongé (48) qui sort vers l'extérieur par la fenêtre (49) avec la sonde de température (47) ou avec le conducteur chauffant, ou avec les lignes d'alimentation de ce dernier qui y sont encastrés.
